(19) 

Europäisches
Patentamt
European
Patent Office
Office européen
des brevets

(11) **EP 4 641 137 A1**

(12) **EUROPEAN PATENT APPLICATION**
published in accordance with Art. 153(4) EPC

(43) Date of publication:
**29.10.2025  Bulletin 2025/44**

(21) Application number: **23910263.5**

(22) Date of filing: **19.12.2023**

(51) International Patent Classification (IPC):
***G01C 21/00*** (2006.01)

(52) Cooperative Patent Classification (CPC):
**G01C 21/00; G01C 21/16; G01S 13/86;
G01S 17/86; G01S 19/42; G01S 19/43**

(86) International application number:
**PCT/CN2023/139854**

(87) International publication number:
**WO 2024/140333 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022  CN 202211697815**

(71) Applicant: **Shenzhen Yinwang Intelligent
Technologies Co., Ltd.
Shenzhen, Guangdong 518110 (CN)**

(72) Inventors:
• **WU, Qi
Shenzhen, Guangdong 518129 (CN)**

• **YAN, Yang
Shenzhen, Guangdong 518129 (CN)**
• **XIA, Yongjun
Shenzhen, Guangdong 518129 (CN)**
• **JIAN, Qifan
Shenzhen, Guangdong 518129 (CN)**
• **XU, Zhe
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **POSITIONING METHOD, APPARATUS AND SYSTEM**

(57)     A positioning method (300), apparatus, and system are disclosed. The positioning method (300) includes: S301 of obtaining first position information sent by a first carrier, where the first position information is associated with an absolute position of the first carrier; S302 of obtaining second position information sent by the first carrier, where the second position information indicates a position of a second carrier relative to the first carrier; S303 of determining third position information based on the first position information and the second position information, where the third position information indicates an absolute position of the second carrier; and S304 of sending the third position information to the second carrier. The positioning method (300) may be applied to a scenario of mixed traffic of a vehicle with a strong positioning capability, like an intelligent vehicle or an electric vehicle, and a vehicle with a weak positioning capability, and helps implement continuous and high-precision positioning of the vehicle with the weak positioning capability.

<u>300</u>

S301: Obtain first position information sent by a first carrier, where the first position information is associated with an absolute position of the first carrier

S302: Obtain second position information sent by the first carrier, where the second position information indicates a position of a second carrier relative to the first carrier

S303: Determine third position information based on the first position information and the second position information, where the third position information indicates an absolute position of the second carrier

S304: Send the third position information to the second carrier

FIG. 3

EP 4 641 137 A1

## Description

This application claims priority to Chinese Patent Application No. 202211697815.0, filed with the China National Intellectual Property Administration on December 28, 2022 and entitled "POSITIONING METHOD, APPARATUS, AND SYSTEM", which is incorporated herein by reference in its entirety.

## TECHNICAL FIELD

This application relates to the field of intelligent driving, and more specifically, to a positioning method, apparatus, and system.

## BACKGROUND

Mixed fleet operations of a human-driven vehicle (referred to as a manned vehicle below) and an autonomous vehicle (referred to as an unmanned vehicle below) are widely applied and of significant value. To ensure mixed traffic safety and accuracy of route planning of the unmanned vehicle, the vehicle needs to be accurately positioned in real time. Complex mixed traffic leads to occlusion between vehicles. Due to the occlusion and a blind zone, the unmanned vehicle may fail to find the manned vehicle in a timely manner only through sensing. Therefore, in the foregoing operating condition, the unmanned vehicle needs to obtain an accurate position of the manned vehicle without relying on sensing, to ensure safety. In addition, an operation distance between the manned vehicle and the unmanned vehicle is very short in some operation sites. Improvement of precision of positioning the manned vehicle can improve precision of recognizing, by the unmanned vehicle, a position of a surrounding vehicle in the mixed traffic, thereby ensuring operation safety.
In view of this, in a scenario of mixed traffic of a manned vehicle and an unmanned vehicle, a solution for improving vehicle positioning precision needs to be urgently developed.

## SUMMARY

This application provides a positioning method, apparatus, and system for a carrier with a weak positioning capability, to help implement continuous and high-precision positioning of the carrier with the weak positioning capability.
The carrier in this application may include a road transportation means, a water transportation means, an air transportation means, an industrial device, an agricultural device, an entertainment device, or the like. For example, the carrier may be a vehicle. The vehicle is a vehicle in a broad sense, and may be a transportation means (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, a toy vehicle, or the like. A type of the vehicle is not specifically limited in embodiments of this application. For another example, the carrier may be a transportation means like an aircraft or a ship.
According to a first aspect, a positioning method is provided. The method may be performed by a cloud server, or may be performed by a computing platform of the cloud server, or may be performed by a chip or a circuit used for the cloud server. This is not limited in this application.
The method includes: obtaining first position information sent by a first carrier, where the first position information is associated with an absolute position of the first carrier; obtaining second position information sent by the first carrier, where the second position information indicates a position of a second carrier relative to the first carrier; determining third position information based on the first position information and the second position information, where the third position information indicates an absolute position of the second carrier; and sending the third position information to the second carrier.
In the foregoing technical solution, an absolute position of a carrier with a weak positioning capability may be determined via a carrier whose absolute position is known. Therefore, in a scenario of mixed traffic of a manned vehicle (with a weak positioning capability) and an unmanned vehicle (with a strong positioning capability), in an area in which a global navigation satellite system like global positioning system (global positioning system, GPS) signal is poor or a BeiDou signal is poor, an absolute position of the vehicle with the weak positioning capability may be determined via the vehicle whose absolute position is known, to implement high-precision positioning of the manned vehicle when the global navigation satellite system signal is weak. In addition, improvement of precision of positioning the manned vehicle helps improve precision of recognizing, by the unmanned vehicle, a position of a surrounding vehicle in mixed traffic, ensure operation safety, and further improve driving safety in a scenario of mixed traffic of the manned vehicle and the unmanned vehicle.
In some possible implementations, the method further includes: sending the third position information to the first carrier.
In some possible implementations, a positioning capability of the first carrier is stronger than a positioning capability of the second carrier; or both the first carrier and the second carrier are entities with a weak positioning capability, but the absolute position of the first carrier has been determined via an entity with a strong positioning capability.

For example, that the first position information is associated with the absolute position of the first carrier may include at least one of the following: First, the first position information indicates the absolute position of the first carrier. Second, the first position information includes an absolute position of a first reference object and a position of the first carrier relative to the first reference object, so that the server can determine the absolute position of the first carrier based on the absolute position of the first reference object and the position of the first carrier relative to the first reference object. Third, the first position information includes a position of the first carrier relative to a second reference object, and the server stores an absolute position of the second reference object, so that the server determines the absolute position of the first carrier based on the absolute position of the second reference object and the position of the first carrier relative to the second reference object.

With reference to the first aspect, in some implementations of the first aspect, the method further includes: obtaining fourth position information sent by the second carrier, where the fourth position information indicates a position of a third carrier relative to the second carrier; determining fifth position information based on the third position information and the fourth position information, where the fifth position information indicates an absolute position of the third carrier; and sending the fifth position information to the third carrier.

For example, the second carrier is an entity with a weak positioning capability.

In the foregoing technical solution, an absolute position of another entity with a weak positioning capability and whose absolute position is unknown may be determined via an entity with a weak positioning capability and whose absolute position is known. This helps implement continuous and high-precision positioning of the carrier.

With reference to the first aspect, in some implementations of the first aspect, before determining the third position information based on the first position information and the second position information, the method further includes: obtaining information that is about a position of the second carrier and that is sent by the second carrier; and determining that the position of the second carrier is invalid.

In some possible implementations, the position of the second carrier is determined via the second carrier based on a real-time kinematic inertial measurement unit (real-time kinematic inertial measurement unit, RTK IMU).

For example, that the position of the second carrier is invalid may be determined in at least one of the following manners:

First, a server receives GPS signal strength-related information that is of an area in which the second carrier is currently located and that is reported by the second carrier; and when determining, based on the GPS signal strength-related information, that a GPS signal strength of the area in which the second carrier is currently located is less than or equal to a preset threshold, determines that the position of the second carrier is invalid.

Second, a server may predict an actual position of the second carrier at the current moment based on information about the position reported by the second carrier at a previous moment, and if a difference between the position of the second carrier and the predicted actual position is greater than a preset threshold, determines that the position of the second carrier is invalid.

In the foregoing technical solution, when it is determined that the position reported by the second carrier is inaccurate, a procedure of determining the absolute position of the second carrier by using the absolute position of the first carrier is started. In other words, when the position reported by the second carrier is accurate, the foregoing procedure is not started. This helps reduce calculation overheads and data transmission overheads.

With reference to the first aspect, in some implementations of the first aspect, determining the third position information based on the first position information and the second position information includes: determining the third position information based on the position of the second carrier, the first position information, and the second position information.

For example, a state equation and measurement equation for multi-source data fusion processing may be constructed based on an error model of an IMU and a motion state of the manned vehicle, to implement fusion processing on IMU data and the position of the second carrier relative to the first carrier.

In the foregoing technical solution, accuracy and precision of the determined absolute position of the second carrier are further improved.

With reference to the first aspect, in some implementations of the first aspect, before obtaining the second position information sent by the first carrier, the method further includes: determining that a GPS signal strength of an area in which the first carrier is located is less than or equal to a preset strength threshold; and sending a first instruction to the first carrier, where the first instruction instructs the first carrier to determine the position of the second carrier relative to the first carrier.

For example, that the signal strength of the area in which the first carrier is located is less than or equal to the preset strength threshold may be determined based on GPS signal strength-related information that is of the area in which the first carrier is currently located and that is reported by the first carrier. Alternatively, an area with a poor GPS signal is pre-calibrated in a server, and the server determines, based on absolute position-related information sent by the first carrier, that the first carrier is in an area with a poor GPS signal.

In the foregoing technical solution, whether to start the procedure of determining the absolute position of the second carrier by using the absolute position of the first carrier is determined based on the global navigation satellite system signal strength of an area in which a carrier with a strong positioning capability is located. This helps reduce calculation overheads and data transmission overheads.

With reference to the first aspect, in some implementations of the first aspect, a positioning capability of the first carrier is stronger than a positioning capability of the second carrier.

According to a second aspect, a positioning method is provided. The method may be performed by a carrier, or may be performed by a computing platform of the carrier, or may be performed by a chip or a circuit used for the carrier. This is not limited in this application. More specifically, the method may be performed by a strong positioning entity.

The method includes: A first carrier sends first position information to a server, where the first position information is associated with an absolute position of the first carrier; and the first carrier sends second position information to the server, where the second position information indicates a position of a second carrier relative to the first carrier; and the first position information and the second position information are used to determine third position information, and the third position information indicates an absolute position of the second carrier.

In the foregoing technical solution, a carrier whose absolute position is known may determine a relative position of a carrier with a weak positioning capability relative to the carrier, so that the server determines an absolute position of the carrier with the weak positioning capability. Therefore, in a scenario of mixed traffic of a manned vehicle and an unmanned vehicle, in an area in which a global navigation satellite system like GPS signal is poor or a BeiDou signal is poor, an absolute position of a vehicle with a weak positioning capability may be determined via a vehicle whose absolute position is known, to implement high-precision positioning of the manned vehicle when the global navigation satellite system signal is weak. In addition, improvement of precision of positioning the manned vehicle helps improve precision of recognizing, by the unmanned vehicle, a position of a surrounding vehicle in mixed traffic, and ensure operation safety.

With reference to the second aspect, in some implementations of the second aspect, the method further includes: The first carrier determines the position of the second carrier relative to the first carrier by using a wireless communication technology.

For example, the wireless communication technology includes an ultra-wideband (ultra-wideband, UWB) technology.

In the foregoing technical solution, a multi-source positioning device like a lidar or a camera apparatus does not need to be configured on an entity with a weak positioning capability. The first carrier with a strong positioning capability can implement, via low-cost UWB, continuous positioning of a vehicle with a weak positioning capability in an area with a weak GPS signal. The method is economical and feasible.

With reference to the second aspect, in some implementations of the second aspect, before the first carrier sends the second position information to the server, the method further includes: The first carrier receives a first instruction sent by the server, where the first instruction instructs the first carrier to determine the position of the second carrier relative to the first carrier; and the first carrier determines the position of the second carrier relative to the first carrier in response to the first instruction.

In the foregoing technical solution, the first carrier receives the first instruction, and then starts a procedure of determining the absolute position of the second carrier by using the absolute position of the first carrier. This helps reduce calculation overheads and data transmission overheads.

According to a third aspect, a positioning method is provided. The method may be performed by a carrier, or may be performed by a computing platform of the carrier, or may be performed by a chip or a circuit used for the carrier. This is not limited in this application. More specifically, the method may be performed by a weak positioning entity.

The method includes: A second carrier sends information about a position of the second carrier to a server; and the second carrier receives third position information sent by the server, where the third position information indicates an absolute position of the second carrier.

In the foregoing technical solution, a carrier with a weak positioning capability may determine an absolute position of the carrier by using information sent by a server. Therefore, in a scenario of mixed traffic of a manned vehicle and an unmanned vehicle, high-precision positioning of the manned vehicle can be implemented in an area in which a global navigation satellite system signal is poor. In addition, improvement of precision of positioning the manned vehicle helps improve precision of recognizing, by the unmanned vehicle, a position of a surrounding vehicle in mixed traffic, and ensure operation safety.

With reference to the third aspect, in some implementations of the third aspect, the method further includes: sending fourth position information to the server, where the fourth position information indicates a position of a third carrier relative to the second carrier; and the fourth position information is used to determine fifth position information, and the fifth position information indicates an absolute position of the third carrier.

In the foregoing technical solution, an absolute position of another entity with a weak positioning capability and whose absolute position is unknown may be determined via an entity with a weak positioning capability and whose absolute position is known. This helps implement continuous and high-precision positioning of the carrier.

With reference to the third aspect, in some implementations of the third aspect, the method further includes: The second carrier determines the position of the third carrier relative to the second carrier by using a wireless communication technology.

For example, the wireless communication technology includes a UWB technology.

In the foregoing technical solution, a multi-source positioning device like a lidar or a camera apparatus does not need to be configured on an entity with a weak positioning capability. The first carrier with a strong positioning capability can implement, via low-cost UWB, continuous positioning of a vehicle with a weak positioning capability in an area with a weak GPS signal. The method is economical and feasible.

According to a fourth aspect, a positioning apparatus is provided. The apparatus includes an obtaining unit, a determining unit, and a transceiver unit. The obtaining unit is configured to: obtain first position information sent by a first carrier, where the first position information is associated with an absolute position of the first carrier; and obtain second position information sent by the first carrier, where the second position information indicates a position of a second carrier relative to the first carrier; the determining unit is configured to determine third position information based on the first position information and the second position information, where the third position information indicates an absolute position of the second carrier; and the transceiver unit is configured to send the third position information to the second carrier.

With reference to the fourth aspect, in some implementations of the fourth aspect, the obtaining unit is further configured to obtain fourth position information sent by the second carrier, where the fourth position information indicates a position of a third carrier relative to the second carrier; the determining unit is further configured to determine fifth position information based on the third position information and the fourth position information, where the fifth position information indicates an absolute position of the third carrier; and the transceiver unit is further configured to send the fifth position information to the third carrier.

With reference to the fourth aspect, in some implementations of the fourth aspect, before the determining unit determines the third position information based on the first position information and the second position information, the obtaining unit is further configured to obtain information that is about a position of the second carrier and that is sent by the second carrier; and the determining unit is further configured to determine that the position of the second carrier is invalid.

With reference to the fourth aspect, in some implementations of the fourth aspect, the determining unit is configured to determine the third position information based on the position of the second carrier, the first position information, and the second position information.

With reference to the fourth aspect, in some implementations of the fourth aspect, before the obtaining unit obtains the second position information sent by the first carrier, the determining unit is further configured to determine that a GPS signal strength of an area in which the first carrier is located is less than or equal to a preset strength threshold; and the transceiver unit is further configured to send a first instruction to the first carrier, where the first instruction instructs the first carrier to determine the position of the second carrier relative to the first carrier.

With reference to the fourth aspect, in some implementations of the fourth aspect, a positioning capability of the first carrier is stronger than a positioning capability of the second carrier.

According to a fifth aspect, a positioning apparatus is provided. The positioning apparatus is disposed on a first carrier, and the apparatus includes a transceiver unit, configured to: send first position information to a server, where the first position information is associated with an absolute position of the first carrier; and send second position information to the server, where the second position information indicates a position of a second carrier relative to the first carrier; and the first position information and the second position information are used to determine third position information, and the third position information indicates an absolute position of the second carrier.

With reference to the fifth aspect, in some implementations of the fifth aspect, the apparatus further includes a determining unit, configured to determine the position of the second carrier relative to the first carrier by using a wireless communication technology.

With reference to the fifth aspect, in some implementations of the fifth aspect, the apparatus further includes the determining unit, and before the transceiver unit sends the second position information to the server, the transceiver unit is further configured to receive a first instruction sent by the server, where the first instruction instructs the first carrier to determine the position of the second carrier relative to the first carrier; and the determining unit is configured to determine the position of the second carrier relative to the first carrier in response to the first instruction.

According to a sixth aspect, a positioning apparatus is provided. The positioning apparatus is disposed on a second carrier, and the apparatus includes a transceiver unit, configured to: send information about a position of the second carrier to a server; and receive third position information sent by the server, where the third position information indicates an absolute position of the second carrier.

With reference to the sixth aspect, in some implementations of the sixth aspect, the transceiver unit is configured to send fourth position information to the server, where the fourth position information indicates a position of a third carrier relative to the second carrier; and the fourth position information is used to determine fifth position information, and the fifth position information indicates an absolute position of the third carrier.

With reference to the sixth aspect, in some implementations of the sixth aspect, the apparatus further includes a determining unit, and the determining unit is configured to determine the position of the third carrier relative to the second carrier by using a wireless communication technology.

According to a seventh aspect, a positioning apparatus is provided. The apparatus includes: a memory, configured to store a computer program; and a processor, configured to execute the computer program stored in the memory, so that the apparatus performs the method according to any one of the possible implementations of the first aspect to the third aspect.

According to an eighth aspect, a server is provided. The server includes the apparatus according to any one of the possible implementations of the fourth aspect.

According to a ninth aspect, a carrier is provided. The carrier includes the apparatus according to any one of the possible implementations of the fifth aspect or the sixth aspect.

According to a tenth aspect, a positioning system is provided. The system includes the server according to any one of the possible implementations of the eighth aspect and the carrier according to any one of the possible implementations of the ninth aspect; or includes the positioning apparatus according to any one of the possible implementations of the seventh aspect.

According to an eleventh aspect, a computer program product is provided. The computer program product includes computer program code. When the computer program code is run on a computer, the computer is enabled to perform the method according to any one of the possible implementations of the first aspect to the third aspect.

It should be noted that all or a part of the computer program code may be stored in a first storage medium. The first storage medium may be encapsulated together with a processor, or may be encapsulated separately from a processor.

According to a twelfth aspect, a computer-readable medium is provided. The computer-readable medium stores instructions. When the instructions are executed by a processor, the processor is enabled to implement the method according to any one of the possible implementations of the first aspect to the third aspect.

According to a thirteenth aspect, a chip is provided. The chip includes a circuit, and the circuit is configured to perform the method according to any one of the possible implementations of the first aspect to the third aspect.

## BRIEF DESCRIPTION OF DRAWINGS

FIG. 1 is a functional block diagram of a vehicle according to an embodiment of this application;

FIG. 2 is a block diagram of a system architecture required for implementing a positioning method according to an embodiment of this application;

FIG. 3 is a schematic flowchart of a positioning method according to an embodiment of this application;

FIG. 4 is a diagram of an application scenario of a positioning method according to an embodiment of this application;

FIG. 5 is a schematic flowchart of a positioning method according to an embodiment of this application;

FIG. 6 is a diagram of an application scenario of a positioning method according to an embodiment of this application;

FIG. 7 is a block diagram of a positioning apparatus according to an embodiment of this application;

FIG. 8 is a block diagram of a positioning apparatus according to an embodiment of this application; and

FIG. 9 is a block diagram of a positioning apparatus according to an embodiment of this application.

## DESCRIPTION OF EMBODIMENTS

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Prefixes such as "first" and "second" in embodiments of this application are merely intended to distinguish between different objects, and impose no limitation on positions, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

As described above, mixed fleet operations of a manned vehicle and an unmanned vehicle are widely applied and of significant value. To ensure mixed traffic safety and accuracy of route planning of the unmanned vehicle, the vehicle needs to be accurately positioned in real time.

Accurate positioning of the manned vehicle faces many challenges. In one aspect, in a scenario, like a port with dense containers, and a mining area with occlusion, some areas have a good GPS signal while some areas have a poor GPS signal. When the GPS is poor, an RTK IMU of the manned vehicle cannot perform high-precision positioning. Therefore, a high-precision positioning technology that can be used in all scenarios with both the good GPS signal and the poor GPS signal needs to be developed. In another aspect, there are a large quantity of mixed manned vehicles. If a plurality of sensors such as a vision radar and a lidar and computing hardware are used for fusion positioning, economic costs of vehicle retrofitting are high, and the retrofitting has low feasibility. Therefore, an economical and feasible manned vehicle positioning solution needs to be developed.

A manned vehicle is usually equipped with a low-precision positioning device like an RTK IMU, positioning precision is greatly reduced when a GPS signal is weak, and therefore the manned vehicle is a weak positioning entity. An unmanned vehicle is usually equipped with a plurality of positioning devices such as a high-precision RTK IMU, a lidar, and a vision sensor, so that when a GPS signal is weak, positioning precision can still be ensured by fusion of results of the plurality of positioning devices, and therefore the unmanned vehicle is a strong positioning entity.

To resolve a problem of inaccurate and/or discontinuous high-precision positioning of the manned vehicle in the scenario with mixed areas having the strong GPS signal and the weak GPS signal in the mining area, port, or the like, in embodiments of this application, a strong positioning entity with high positioning precision is used to provide relative positioning for a weak positioning entity with low positioning precision, thereby implementing high-precision positioning of the weak positioning entity. Relative positioning between the weak positioning entity and the strong positioning entity may be implemented by using a wireless communication technology like UWB, and retrofitting of a manned vehicle can be completed without high costs. This can implement high-precision positioning of the weak positioning entity at low costs. Further, relative positioning between vehicles and multi-vehicle collaborative positioning are performed in networking via the vehicle networking formed by the strong and weak positioning entities, and multi-source data fusion processing is performed on absolute position information and relative position information between the strong positioning entity and the weak positioning entity, to implement continuous high-precision positioning of the manned vehicle in the mixed areas having the strong GPS signal and the weak GPS signal.

Technical solutions in embodiments of this application are described below with reference to accompanying drawings.

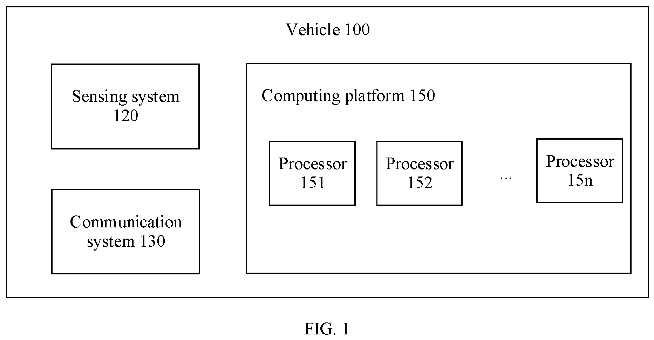

FIG. 1 is a functional block diagram of a vehicle according to an embodiment of this application. As shown in FIG. 1, the vehicle 100 may include a sensing system 120, a communication system 130, and a computing platform 150. The sensing system 120 may include several sensors configured to sense information about an environment around the vehicle 100. For example, the sensing system 120 may include a positioning system, and the positioning system may be a GPS, a BeiDou system, or another positioning system. For another example, the sensing system 120 may further include one or more of an RTK IMU, a lidar, a millimeter-wave radar, an ultrasonic radar, and a camera apparatus.

The communication system 130 may include a wireless communication system, configured to communicate with the outside, for example, communicate with a cloud server or another vehicle. The wireless communication system may include one or more of a radio frequency identification (radio frequency identification, RFID) module, Bluetooth low energy (Bluetooth low energy, BLE), a UWB module, or another wireless short-range communication system (for example, an in-vehicle wireless short-range communication system).

Some or all functions of the vehicle 100 may be controlled by the computing platform 150. The computing platform 150 may include processors 151 to 15n. The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field-programmable gate array (field-programmable gate array, FPGA). In the reconfigurable hardware circuit, a process in which the processor loads a configuration document to implement a hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

It should be noted that one or more of the foregoing components may be separately installed or associated with the vehicle 100. For example, the memory may be partially or completely separated from the vehicle 100. The foregoing components may be communicatively coupled together in a wired and/or wireless manner.

It should be understood that the foregoing components are merely examples. In actual application, components in the foregoing modules may be added or deleted according to an actual requirement.

In some possible implementations, if the vehicle 100 is the foregoing weak positioning entity, the sensing system 120 may include an RTK IMU and a GPS; or if the vehicle 100 is the foregoing strong positioning entity, the sensing system 120 further includes one or more of a lidar, a millimeter-wave radar, an ultrasonic radar, and a camera apparatus in addition to an RTK IMU and a GPS. In addition, a wireless carrier communication unit like a UWB module is disposed in both the weak positioning entity and the strong positioning entity, and is configured to perform ranging. For example, the UWB module may include a UWB base station and/or a UWB tag.

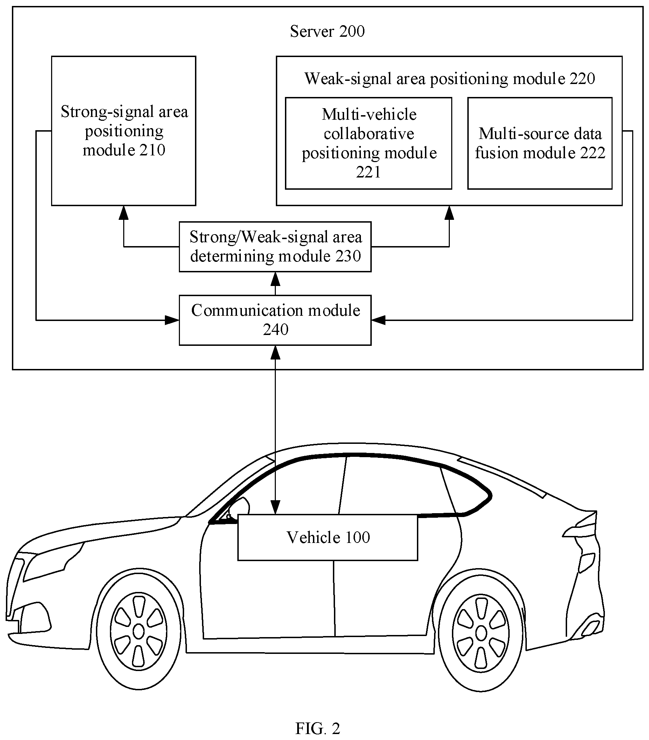

FIG. 2 is a diagram of an application scenario of a positioning method according to an embodiment of this application. As shown in FIG. 2, the scenario includes a vehicle 100 and a server 200. The server 200 includes a strong-signal area positioning module 210, a weak-signal area positioning module 220, a strong/weak-signal area determining module 230, and a communication module 240. The vehicle 100 is a weak positioning entity. The server 200 communicates with the vehicle 100 via the communication module 240. The communication module 240 receives position information sent by the vehicle 100, and sends information about an absolute position to the vehicle 100. The strong/weak-signal determining module 230 is configured to determine, based on the position information sent by the vehicle 100, a strength of a GPS signal of an area in which the vehicle 100 is located. When it is determined that the area in which the vehicle 100 is located is an area with a strong GPS signal, the position information is sent to the strong-signal area positioning module 210; and after determining an absolute position of the vehicle 100 based on the position information, the strong-signal area positioning module 210 sends the information about the absolute position to the communication module 240. When it is determined that the area in which the vehicle 100 is located is an area with a weak GPS signal, first position information of a strong positioning entity and second position information of the vehicle 100 relative to the strong positioning entity are sent to the weak-signal area positioning module 220; and after determining an absolute position of the vehicle 100 based on the first position information and the second position information, the weak-signal area positioning module 220 sends the information about the absolute position to the communication module 240. For example, the weak-signal area positioning module 220 includes a multi-vehicle collaborative positioning module 221 and a multi-source data fusion module 222. The multi-vehicle collaborative positioning module 221 determines absolute positions of strong and weak positioning entities based on position information of the strong positioning entity and information about the weak positioning entity relative to the strong positioning entity. The multi-source data fusion module 222 is configured to fuse RTK IMU data of the weak positioning entity, relative position data that is of the weak positioning entity and that is obtained by the strong positioning entity, and the like, to further improve precision of the absolute position.

It should be noted that the "absolute position" in embodiments of this application indicates longitude and latitude information of a point, or a position of the point determined based on the longitude and latitude information.

It should be understood that the foregoing components are merely examples. In actual application, components in the foregoing modules may be added or deleted according to an actual requirement.

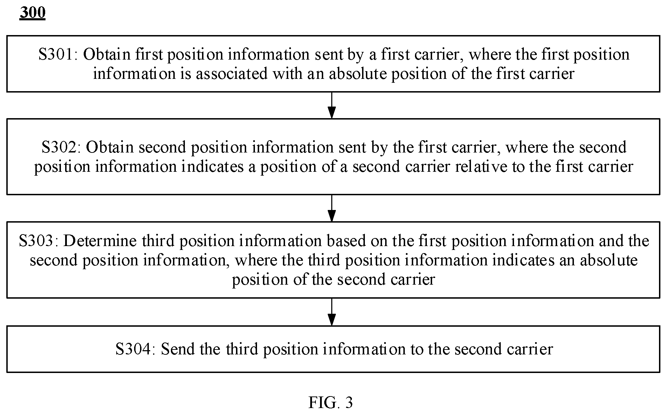

FIG. 3 is a schematic flowchart of a positioning method according to an embodiment of this application. The method 300 may be performed by the server 200 shown in FIG. 2. More specifically, the method 300 may be performed by the weak-signal area positioning module 220 in the server 200. For example, descriptions are provided below by using an example in which the method 300 is performed by the server 200. The method 300 may include S301 to S304.

S301: Obtain first position information sent by a first carrier, where the first position information is associated with an absolute position of the first carrier.

For example, the first carrier may be the strong positioning entity in the foregoing embodiment, or may be another carrier with high positioning precision when a GPS signal is weak.

For example, that the first position information is associated with the absolute position of the first carrier may include at least one of the following: First, the first position information indicates the absolute position of the first carrier. Second, the first position information includes an absolute position of a first reference object and a position of the first carrier relative to the first reference object, so that the server can determine the absolute position of the first carrier based on the absolute position of the first reference object and the position of the first carrier relative to the first reference object. Third, the first position information includes a position of the first carrier relative to a second reference object, and the server stores an absolute position of the second reference object, so that the server determines the absolute position of the first carrier based on the absolute position of the second reference object and the position of the first carrier relative to the second reference object.

S302: Obtain second position information sent by the first carrier, where the second position information indicates a position of a second carrier relative to the first carrier.

For example, the second carrier may be the weak positioning entity in the foregoing embodiment, or may be another carrier with poor positioning precision when a GPS signal is weak.

In some possible implementations, a UWB base station is disposed on the first carrier, a UWB tag is disposed on the second carrier, and the second position information may be determined by the first carrier based on a position of the UWB tag, of the second carrier, detected via the UWB base station.

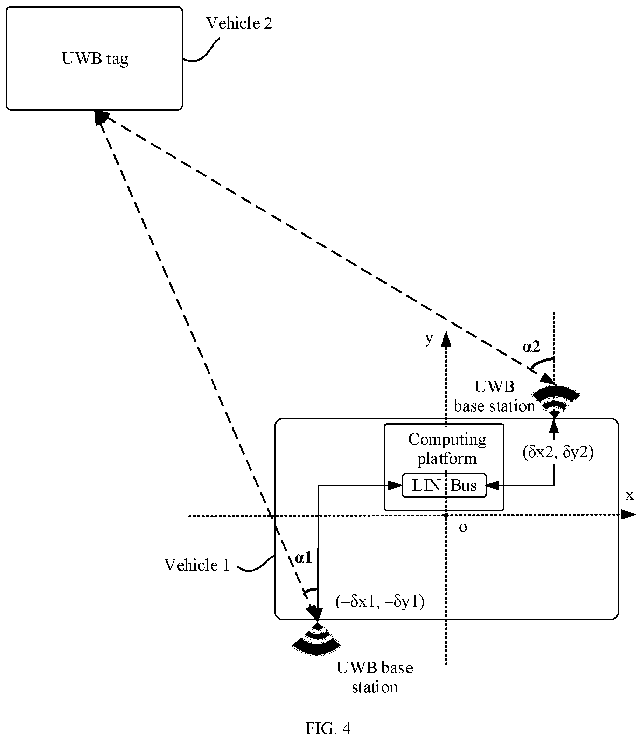

For example, as shown in FIG. 4, an example in which the first carrier is a vehicle 1, and the second carrier is a vehicle 2 is used. The vehicle 1 includes a computing platform and UWB base stations. The UWB base stations communicate with the computing platform through local interconnect network buses (local interconnect network buses, LIN buses). The UWB base stations are configured to receive signals sent by a UWB tag of the vehicle 2. The computing platform may be the computing platform 150 in FIG. 1, and is configured to determine a position of the vehicle 2 based on the signals received by the UWB base stations.

For example, the position of the vehicle 2 relative to the vehicle 1 may be determined by using the following method: First, point coordinates of the two UWB base stations in the vehicle 1 are determined. For example, the point coordinates are $(-\delta x1, -\delta y1)$ and $(\delta x2, \delta y2)$ shown in FIG. 4. Then, angles of the UWB tag, of the vehicle 2, relative to the UWB base stations of the vehicle 1 are determined based on the signals that are from the UWB tag and that are received by the two UWB base stations and a principle of an angle of arrival (angle of arrival, AOA) positioning technology. For example, the angles are $\alpha1$ and $\alpha2$ shown in FIG. 4. Further, the position of the vehicle 2 relative to the vehicle 1 is determined based on the foregoing angles and a time difference of arrival (time difference of arrival, TDOA). The point coordinates of the UWB base stations may be pre-calibrated.

In some possible implementations, when two or more UWB base stations are disposed on the vehicle 1, and the UWB tag of the vehicle 2 is in all coverage of the more than two mobile base stations, the position of the vehicle 2 may be determined by using a least squares method.

S303: Determine third position information based on the first position information and the second position information, where the third position information indicates an absolute position of the second carrier.

S304: Send the third position information to the second carrier.

In some possible implementations, after determining the absolute position of the second carrier, the method further includes: obtaining fourth position information sent by the second carrier, where the fourth position information indicates a position of a third carrier relative to the second carrier; determining fifth position information based on the third position information and the fourth position information, where the fifth position information indicates an absolute position of the third carrier; and sending the fifth position information to the third carrier.

The third carrier may be the weak positioning entity in the foregoing embodiment, or may be another carrier with poor positioning precision when a GPS signal is weak. When the GPS signal is weak, the third carrier is far away from the strong positioning entity, and consequently the strong positioning entity cannot obtain information about a position of the third carrier. In this case, an absolute position of another weak positioning entity may also be determined via a weak positioning entity whose absolute position is known.

In some possible implementations, before determining the third position information based on the first position information and the second position information, the method further includes: obtaining information that is about a position of the second carrier and that is sent by the second carrier; and determining that the position of the second carrier is invalid.

For example, the "position of the second carrier" may be determined via an RTK IMU. However, because a GPS signal of an area in which the second carrier is currently located is weak, there is a large difference between the "position of the second carrier" determined via the RTK IMU and an actual absolute position of the second carrier, that is, "the position of the second carrier is invalid". Further, the absolute position of the second carrier is determined based on the first position information and the second position information.

In some possible implementations, the method includes: determining the third position information based on the position of the second carrier, the first position information, and the second position information.

In some possible implementations, before obtaining the second position information sent by the first carrier, the method further includes: determining that a GPS signal strength of an area in which the first carrier is located is less than or equal to a preset strength threshold; and sending a first instruction to the first carrier, where the first instruction instructs the first carrier to determine the position of the second carrier relative to the first carrier.

For example, whether the GPS signal of the area in which the first carrier is located is less than or equal to the preset strength threshold may be determined based on the position of the first carrier; or whether the GPS signal strength of the area in which the first carrier is located is less than or equal to the preset strength threshold may be determined based on GPS signal strength-related information reported by the first carrier.

According to the positioning method provided in this embodiment of this application, high-precision positioning can be implemented for the weak positioning entity in the area with the weak GPS signal. Further, the absolute position of the another weak positioning entity can be determined via the weak positioning entity whose absolute position is known, to implement continuous and high-precision positioning of the weak positioning entity. This resolves a problem of inaccurate and/or discontinuous high-precision positioning of a weak positioning entity in a mixed scenario of strong and weak GPS signals, such as a mining area or a port. In addition, from a perspective of economic costs, in the positioning method provided in this embodiment of this application, a multi-source positioning device like a high-precision RTK IMU, a lidar, or a camera apparatus does not need to be configured on the weak positioning entity, and continuous positioning of the weak positioning entity in the area with the weak GPS signal can be implemented via the low-cost UWB. Therefore, the method is economical and feasible.

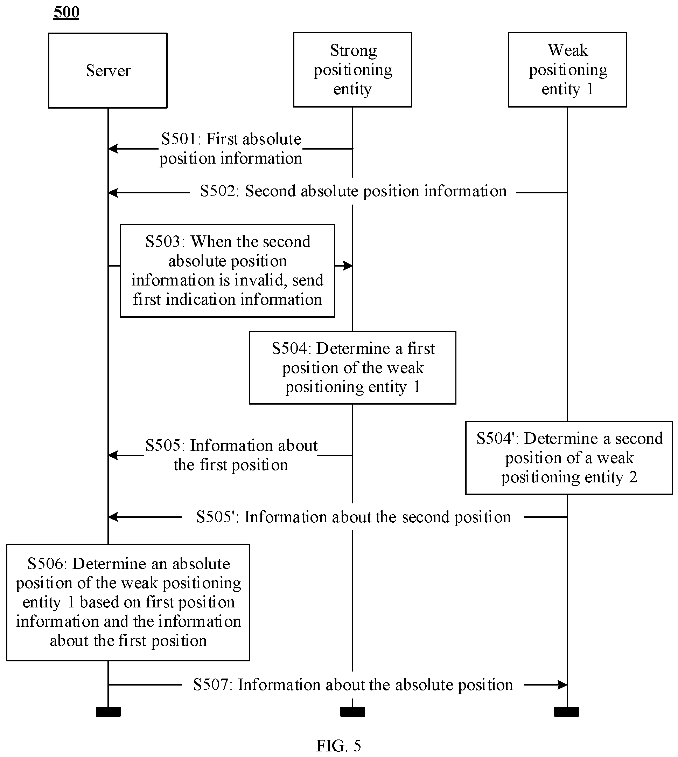

FIG. 5 is a schematic flowchart of a positioning method according to an embodiment of this application. The method 500 may be performed by the vehicle 100 and the server 200 shown in FIG. 2. The method 500 is an extension of the method 300. For example, the method 500 may be executed in parallel with the method 300. For example, steps performed by a server in the method 500 may be performed by the server 200 shown in FIG. 2, and steps performed by a strong positioning entity and weak positioning entities (such as a weak positioning entity 1 and a weak positioning entity 2) in the method 500 may be performed by the vehicle 100 shown in FIG. 2. It should be understood that the steps or operations of the positioning method shown in FIG. 5 are merely examples. In embodiments of this application, other operations or variations of the operations in FIG. 5 may be performed. In addition, the steps in FIG. 5 may be performed in a sequence different from that presented in FIG. 5, and not all the operations in FIG. 5 may need to be performed. For example, the method 500 may include S501 to S507.

S501: The strong positioning entity sends first absolute position information to the server.

For example, the strong positioning entity may be an example of the first carrier in the method 300, and the first absolute position information may be an example of the first position information.

For example, the first absolute position information may indicate a position determined by the strong positioning entity via a multi-source positioning device like an RTK IMU, a lidar, or a camera apparatus.

In some possible implementations, the strong positioning entity periodically reports an absolute position of the strong positioning entity to the server.

S502: The weak positioning entity 1 sends second absolute position information to the server.

For example, the weak positioning entity 1 may be an example of the second carrier in the method 300, and the second absolute position information may be an example of the information about the position of the second carrier.

For example, the second absolute position information may indicate a position determined by the weak positioning entity 1 via an RTK IMU.

In some possible implementations, the weak positioning entity periodically reports an absolute position of the weak positioning entity to the server. It should be understood that, when a GPS signal is weak, the absolute position periodically reported by the weak positioning entity may be inaccurate.

S503: When the second absolute position information is invalid, the server sends first indication information to the strong positioning entity.

In some possible implementations, the server receives GPS signal strength-related information that is of an area in which the weak positioning entity 1 is currently located and that is reported by the weak positioning entity 1, and when determining, based on the GPS signal strength-related information, that a GPS signal strength of the area in which the weak positioning entity 1 is currently located is less than or equal to a preset threshold, determines that the second absolute position information is invalid.

In some possible implementations, the server may predict an actual position of the weak positioning entity 1 at the current moment based on position information reported by the weak positioning entity 1 at a previous moment, and if a difference between a position of the weak positioning entity 1 indicated by the second absolute position information and the predicted actual position is greater than a preset threshold, determines that the second absolute position information is invalid.

Further, the server sends the first indication information to the strong positioning entity, where the first indication information indicates the strong positioning entity to determine a position of the weak positioning entity 1 relative to the strong positioning entity. For example, the first indication information may be an example of the first instruction in the method 300.

It should be noted that the strong positioning entity is any strong positioning entity located in an area with a poor GPS signal, and the weak positioning entity 1 may be any weak positioning entity within a sensing range of a UWB base station of the strong positioning entity.

S504: The strong positioning entity determines a first position of the weak positioning entity 1.

For example, the strong positioning entity determines the first position of the weak positioning entity 1 via a UWB module based on AOA and TDOA principles. For a specific method for determining the first position by the strong positioning entity, refer to the foregoing descriptions related to FIG. 4. Details are not described herein again.

S505: The strong positioning entity sends information about the first position to the server.

For example, the information about the first position may be an example of the second position information in the foregoing method 300.

S504': The weak positioning entity 1 determines a second position of the weak positioning entity 2.

For example, the weak positioning entity 2 may be an example of the third carrier in the method 300.

For example, for a specific method for determining the second position by the weak positioning entity 1, refer to the foregoing descriptions related to FIG. 4. Details are not described herein again.

S505': The weak positioning entity 1 sends information about the second position to the server.

For example, the information about the second position may be an example of the fourth position information in the method 300.

S506: The server determines the absolute position of the weak positioning entity 1 based on the first position information and the information about the first position.

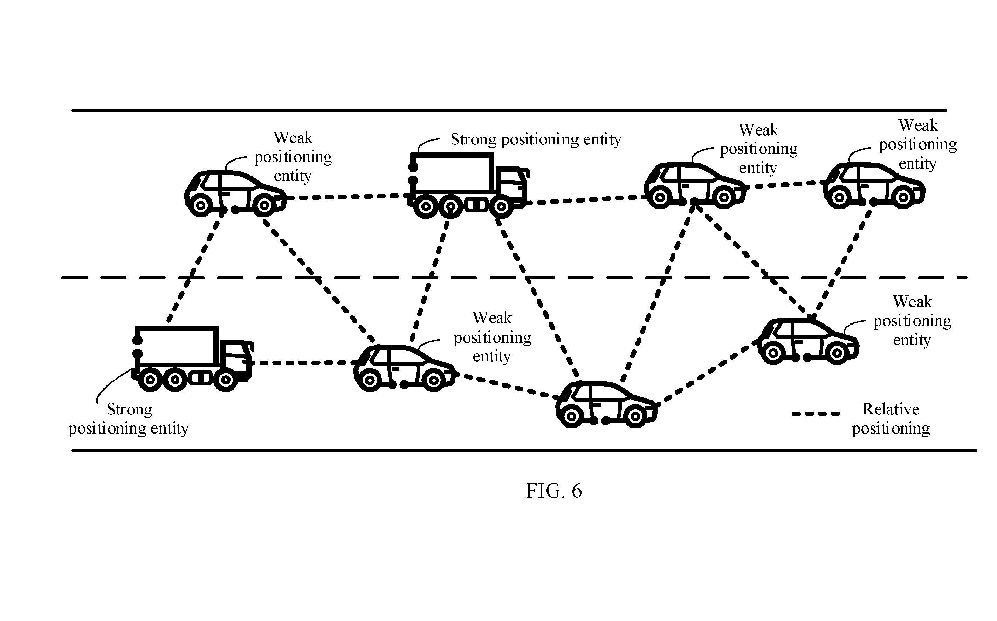

In some possible implementations, positioning information of the strong and weak positioning entities may form a large constraint relationship based on ranging data of vehicle networking including the strong and weak positioning entities. As shown in FIG. 6, an absolute position of each weak positioning entity may be determined based on an absolute position of the strong positioning entity, a position of a weak positioning entity relative to the strong positioning entity, and a position of the weak positioning entity relative to a weak positioning entity, to implement continuous and high-precision positioning of the weak positioning entity.

In the foregoing scenario, measurement information of a relative distance may be obtained based on mutual ranging information of UWB base stations and a UWB tag and include a measurement distance $r_{ik}$ between a UWB tag i and a UWB base station k, and a measurement distance $d_{ij}$ between the UWB tag i and a UWB base station j. When the plurality of weak positioning entities and the strong positioning entity enter a mutual ranging range of UWB, for multi-vehicle networking including P unmanned vehicles (UWB base stations) and Q manned vehicles (UWB tags), the following distance measurement equation $Z(k)$ may be obtained:

$$Z(k) = [r_{11}^2(k), \cdots, r_{1P}^2(k), r_{21}^2(k), \cdots, r_{2P}^2(k), \cdots r_{Q1}^2(k), \cdots, r_{QP}^2(k),$$

$$d_{11}^2(k), \cdots, d_{1Q}^2(k), d_{22}^2(k), \cdots, d_{2Q}^2(k), \cdots d_{(Q-1)Q}^2(k)].$$

In vehicle networking, the weak positioning entity serves as a to-be-positioned mobile target node, and a state equation of an $i^{th}$ weak positioning entity at a moment k is represented as the following vector set $X_i(k)$ of a position and a velocity:

$$X_i(k) = [x_i(k), y_i(k), v_{x_i}(k), v_{y_i}(k)]$$

The state equation is discretized. Considering that the UWB operates at a high frequency and a ranging time interval is short, linearization processing may be performed on the position and the velocity of the weak positioning entity within the unit sampling time interval. Therefore, a state equation for the position and the velocity of the $i^{th}$ weak positioning entity may be obtained as follows:

$$x_i(k) = x_i(k-1) + v_{x_i}(k-1) * dt + \frac{1}{2}a_{xi}(k-1)dt^2;$$

$$y_i(k) = y_i(k-1) + v_{y_i}(k-1) * dt + \frac{1}{2}a_{yi}(k-1)dt^2;$$

$$v_{x_i}(k) = v_{x_i}(k-1) + a_{xi}(k-1) * dt;$$

$$v_{y_i}(k) = v_{y_i}(k-1) + a_{yi}(k-1) * dt.$$

Therefore, the state equation of the $i^{th}$ weak positioning entity at the moment k may be obtained as follows:

$$X_i(k) = F_i(k-1) * X_i(k) + W_i(k-1)$$

A multi-source information fusion system for vehicle networking is constructed based on the foregoing state equation $X_i(k)$ and measurement equation $Z(k)$, to implement continuous and high-precision positioning of the weak positioning entity.

In some possible implementations, the server determines the absolute position of the weak positioning entity 1 based on the first position information, the second position information, and the information about the first position.

For example, if the first position information includes IMU data, a state equation and measurement equation for multi-source data fusion processing may be constructed based on an error model of an IMU and a motion state of a manned vehicle, to implement fusion processing on the IMU data and the first position.

S507: The server sends information about the absolute position to the weak positioning entity 1.

For example, the information about the absolute position may be an example of the third position information in the foregoing method 300.

In some possible implementations, the area with the poor GPS signal is pre-calibrated in the server, and the server determines, based on the first absolute position information sent by the strong positioning entity, that the strong positioning entity is located in the area with the poor GPS signal. Further, the server sends the first indication information to the strong positioning entity, so that the strong positioning entity obtains the position of the weak positioning entity within the sensing range of the UWB base station of the strong positioning entity, and reports the position of the weak positioning entity sensed by the UWB base station.

In some possible implementations, S504' and S505' may be performed after S506, or may be performed synchronously with S504 and S505. This is not specifically limited in this embodiment of this application.

In some possible implementations, after S504' and S505' are performed, the server determines an absolute position of the weak positioning entity 2 based on the absolute position of the weak positioning entity 1 and the second position of the weak positioning entity 2, and sends information about the absolute position of the weak positioning entity 2 to the weak positioning entity 2.

It should be noted that, in this embodiment of this application, areas with strong and weak GPS signals are used as an example to describe how to improve positioning precision and continuity of the weak positioning entity when the GPS signal is weak. It may be understood that, based on the concept of this application, when a person skilled in the art applies this solution to a scenario in which positioning precision is poor due to another positioning system (for example, a BeiDou system), the solution should also fall within the protection scope of this application.

In embodiments of this application, unless otherwise stated or there is a logic conflict, terms and/or descriptions between various embodiments are consistent and may be mutually referenced, and technical features in different embodiments may be combined based on an internal logical relationship thereof, to form a new embodiment.

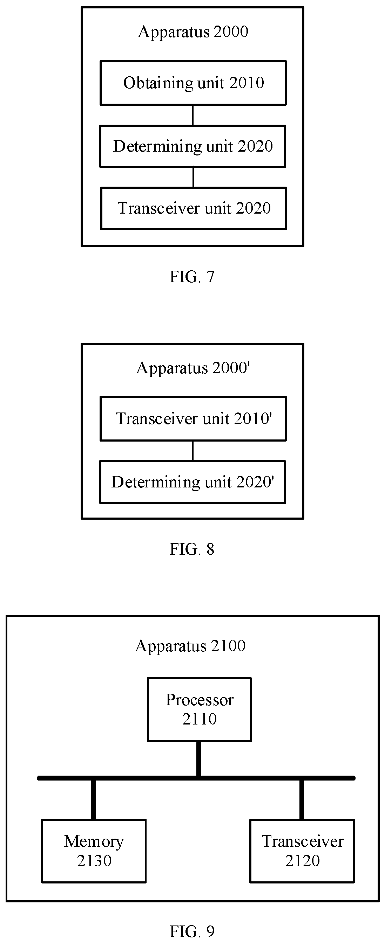

The methods provided in embodiments of this application are described above in detail with reference to FIG. 1 to FIG. 6. Apparatuses provided in embodiments of this application are described below in detail with reference to FIG. 7 and FIG. 9. It should be understood that descriptions of apparatus embodiments correspond to the descriptions of the method embodiments. Therefore, for content that is not described in detail, refer to the method embodiments. For brevity, details are not described herein again.

FIG. 7 is a block diagram of a positioning apparatus 2000 according to an embodiment of this application. The apparatus 2000 includes an obtaining unit 2010, a determining unit 2020, and a transceiver unit 2030.

The apparatus 2000 may include a unit configured to perform the method in FIG. 3, or a unit configured to perform the method performed by the server in FIG. 5. In addition, the units in the apparatus 2000 are separately used to implement corresponding procedures of the method embodiments in FIG. 3 and FIG. 5.

When the apparatus 2000 is configured to perform the method 300 in FIG. 3, the obtaining unit 2010 may be configured to perform S301 and S302 in the method 300, the determining unit 2020 may be configured to perform S303 in the method 300, and the transceiver unit 2030 may be configured to perform S304 in the method 300.

Specifically, the obtaining unit 2010 is configured to: obtain first position information sent by a first carrier, where the first position information is associated with an absolute position of the first carrier; and obtain second position information sent by the first carrier, where the second position information indicates a position of a second carrier relative to the first carrier; the determining unit 2020 is configured to determine third position information based on the first position information and the second position information, where the third position information indicates an absolute position of the second carrier; and the transceiver unit 2030 is configured to send the third position information to the second carrier.

In some possible implementations, the obtaining unit 2010 is further configured to obtain fourth position information sent by the second carrier, where the fourth position information indicates a position of a third carrier relative to the second carrier; the determining unit 2020 is further configured to determine fifth position information based on the third position information and the fourth position information, where the fifth position information indicates an absolute position of the third carrier; and the transceiver unit 2030 is further configured to send the fifth position information to the third carrier.

In some possible implementations, before the determining unit 2020 determines the third position information based on the first position information and the second position information, the obtaining unit 2010 is further configured to obtain information that is about a position of the second carrier and that is sent by the second carrier; and the determining unit 2020 is further configured to determine that the position of the second carrier is invalid.

In some possible implementations, the determining unit 2020 is configured to determine the third position information based on the position of the second carrier, the first position information, and the second position information.

In some possible implementations, before the obtaining unit 2010 obtains the second position information sent by the first carrier, the determining unit 2020 is further configured to determine that a GPS signal strength of an area in which the first carrier is located is less than or equal to a preset strength threshold; and the transceiver unit 2030 is further configured to send a first instruction to the first carrier, where the first instruction instructs the first carrier to determine the position of the second carrier relative to the first carrier.

In some possible implementations, a positioning capability of the first carrier is stronger than a positioning capability of the second carrier.

For example, the obtaining unit 2010, the determining unit 2020, and the transceiver unit 2030 may be disposed in the server 200 shown in FIG. 2. More specifically, the obtaining unit 2010 and the determining unit 2020 may be disposed in the weak-signal area positioning module 220 shown in FIG. 2, and the transceiver unit 2030 may be disposed in the communication module 240 shown in FIG. 2.

FIG. 8 is a block diagram of a positioning apparatus 2000' according to an embodiment of this application. The apparatus 2000 includes a transceiver unit 2010' and a determining unit 2020'.

The apparatus 2000' may include a unit configured to perform the method performed by the strong positioning entity or the weak positioning entity in FIG. 5. In addition, the units in the apparatus 2000 are separately used to implement corresponding procedures of the method embodiment in FIG. 5.

When the apparatus 2000' is configured to perform the method performed by the strong positioning entity in the method 500 in FIG. 5, the transceiver unit 2010' may be configured to perform S501, S503, and S505 in the method 500, and the determining unit 2020' may be configured to perform S504 in the method 500.

Specifically, the apparatus 2000' is disposed on a first carrier, and the apparatus 2000' includes the transceiver unit 2020', configured to: send first position information to a server, where the first position information is associated with an absolute position of the first carrier; and send second position information to the server, where the second position information indicates a position of a second carrier relative to the first carrier; and the first position information and the second position information are used to determine third position information, and the third position information indicates an absolute position of the second carrier.

In some possible implementations, the apparatus 2000' further includes the determining unit 2020', configured to determine the position of the second carrier relative to the first carrier by using a wireless communication technology.

In some possible implementations, the apparatus 2000' further includes the determining unit 2020'. Before the transceiver unit 2010' sends the second position information to the server, the transceiver unit 2010' is further configured to receive a first instruction sent by the server, where the first instruction instructs the first carrier to determine the position of the second carrier relative to the first carrier; and the determining unit 2020' is configured to determine the position of the second carrier relative to the first carrier in response to the first instruction.

In some possible implementations, when the apparatus 2000' is configured to perform the method performed by the weak positioning entity in the method 500 in FIG. 5, the transceiver unit 2010' may be configured to perform S502, S505', and S507 in the method 500, and the determining unit 2020' may be configured to perform S504' in the method 500.

Specifically, the apparatus 2000' is disposed on a second carrier, and the apparatus 2000' includes the transceiver unit 2010', configured to: send information about a position of the second carrier to a server; and receive third position information sent by the server, where the third position information indicates an absolute position of the second carrier.

In some possible implementations, the transceiver unit 2010' is configured to send fourth position information to the server, where the fourth position information indicates a position of a third carrier relative to the second carrier; and the fourth position information is used to determine fifth position information, and the fifth position information indicates an absolute position of the third carrier.

In some possible implementations, the apparatus further includes the determining unit 2020', and the determining unit 2020' is configured to determine the position of the third carrier relative to the second carrier by using a wireless communication technology.

For example, the transceiver unit 2010' and the determining unit 2020' may be disposed in the vehicle 100 shown in FIG. 1 or FIG. 2. More specifically, the transceiver unit 2010' may be disposed in the communication system 130 shown in FIG. 1, and the determining unit 2020' may be disposed in the computing platform 150 shown in FIG. 1.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores an instruction, and the processor invokes the instruction stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units.

All units of the foregoing apparatus may be implemented in a form of software invoked by the processor, or all units may be implemented in a form of the hardware circuit, or some units may be implemented in a form of software invoked by the processor, and the remaining part may be implemented in a form of the hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated together, or may be implemented independently. In an implementation, these units are integrated together and implemented in a form of a system-on-a-chip (system-on-a-chip, SoC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

In a specific implementation process, the operations performed by the obtaining unit 2010, the determining unit 2020, and the transceiver unit 2030 may be performed by one processor, or may be performed by different processors. In a specific implementation process, the one or more processors may be processors disposed on the server 200 shown in FIG. 2, or the apparatus 2000 may be a chip disposed in the server 200.

In a specific implementation process, the operations performed by the transceiver unit 2010' and the determining unit 2020' may be performed by one processor, or may be performed by different processors. In a specific implementation process, the one or more processors may be processors disposed on the vehicle 100 shown in FIG. 1, or the apparatus 2000' may be a chip disposed in the vehicle 100.

FIG. 9 is a block diagram of a positioning apparatus according to an embodiment of this application. The positioning apparatus 2100 shown in FIG. 9 may include a processor 2110, a transceiver 2120, and a memory 2130. The processor 2110, the transceiver 2120, and the memory 2130 are connected through an internal connection path. The memory 2130 is configured to store an instruction. The processor 2110 is configured to execute the instruction stored in the memory 2130, to implement the positioning method in the foregoing embodiments. Optionally, the memory 2130 may be coupled to the processor 2110 through an interface, or integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses, for example, but is not limited to, a transceiver apparatus of a transceiver type, to implement the communication between the apparatus 2100 and the another device or the communication network, to receive/send data/information used to implement the positioning method in the foregoing embodiments.

In a specific implementation process, the apparatus 2100 may perform various operations performed by the server, and the apparatus 2100 may be disposed in the server 200 shown in FIG. 2. Alternatively, the apparatus 2100 may perform various operations performed by the carrier, and the apparatus 2100 may be disposed in the vehicle 100 shown in FIG. 1 or FIG. 2.

An embodiment of this application further provides a carrier. The carrier includes the apparatus 2000' or the apparatus 2100.

In some possible implementations, the carrier may be a vehicle.

An embodiment of this application further provides a server. The server includes the foregoing apparatus 2000 or the foregoing apparatus 2100.

An embodiment of this application further provides a positioning system. The system includes the foregoing server and the foregoing carrier. Alternatively, the system may include the foregoing apparatus 2100.

An embodiment of this application further provides a computer program product. The computer program product includes computer program code. When the computer program code is run on a computer, the computer is enabled to implement the positioning method in embodiments of this application.

An embodiment of this application further provides a computer-readable storage medium. The computer-readable medium stores computer instructions. When the computer instructions are run on a computer, the computer is enabled to implement the positioning method in embodiments of this application.

An embodiment of this application further provides a chip, including a circuit, configured to perform the positioning method in embodiments of this application.

In an implementation process, steps in the foregoing methods can be completed by using a hardware integrated logic circuit in the processor, or by using an instruction in a form of software. The method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method, comprising:

    obtaining first position information sent by a first carrier, wherein the first position information is associated with an absolute position of the first carrier;
    obtaining second position information sent by the first carrier, wherein the second position information indicates a position of a second carrier relative to the first carrier;
    determining third position information based on the first position information and the second position information, wherein the third position information indicates an absolute position of the second carrier; and
    sending the third position information to the second carrier.

2. The method according to claim 1, wherein the method further comprises:

    obtaining fourth position information sent by the second carrier, wherein the fourth position information indicates a position of a third carrier relative to the second carrier;
    determining fifth position information based on the third position information and the fourth position information, wherein the fifth position information indicates an absolute position of the third carrier; and
    sending the fifth position information to the third carrier.

3. The method according to claim 1 or 2, wherein before determining the third position information based on the first position information and the second position information, the method further comprises:

    obtaining information that is about a position of the second carrier and that is sent by the second carrier; and
    determining that the position of the second carrier is invalid.

4. The method according to claim 3, wherein determining the third position information based on the first position information and the second position information comprises:
    determining the third position information based on the position of the second carrier, the first position information, and the second position information.

5. The method according to any one of claims 1 to 4, wherein before obtaining the second position information sent by the first carrier, the method further comprises:

determining that a global positioning system GPS signal strength of an area in which the first carrier is located is less than or equal to a preset strength threshold; and

sending a first instruction to the first carrier, wherein the first instruction instructs the first carrier to determine the position of the second carrier relative to the first carrier.

6. The method according to any one of claims 1 to 5, wherein a positioning capability of the first carrier is stronger than a positioning capability of the second carrier.

7. A positioning method, comprising:

sending, by a first carrier, first position information to a server, wherein the first position information is associated with an absolute position of the first carrier; and

sending, by the first carrier, second position information to the server, wherein the second position information indicates a position of a second carrier relative to the first carrier; and

the first position information and the second position information are used to determine third position information, and the third position information indicates an absolute position of the second carrier.

8. The method according to claim 7, wherein the method further comprises:
determining, by the first carrier, the position of the second carrier relative to the first carrier by using a wireless communication technology.

9. The method according to claim 7 or 8, wherein before sending, by the first carrier, the second position information to the server, the method further comprises:

receiving, by the first carrier, a first instruction sent by the server, wherein the first instruction instructs the first carrier to determine the position of the second carrier relative to the first carrier; and

determining, by the first carrier, the position of the second carrier relative to the first carrier in response to the first instruction.

10. A positioning method, comprising:

sending, by a second carrier, information about a position of the second carrier to a server; and

receiving, by the second carrier, third position information sent by the server, wherein the third position information indicates an absolute position of the second carrier.

11. The method according to claim 10, wherein the method further comprises:

sending fourth position information to the server, wherein the fourth position information indicates a position of a third carrier relative to the second carrier; and

the fourth position information is used to determine fifth position information, and the fifth position information indicates an absolute position of the third carrier.

12. The method according to claim 11, wherein the method further comprises:
determining, by the second carrier, the position of the third carrier relative to the second carrier by using a wireless communication technology.

13. A positioning apparatus, comprising an obtaining unit, a determining unit, and a transceiver unit, wherein

the obtaining unit is configured to: obtain first position information sent by a first carrier, wherein the first position information is associated with an absolute position of the first carrier; and

obtain second position information sent by the first carrier, wherein the second position information indicates a position of a second carrier relative to the first carrier;

the determining unit is configured to determine third position information based on the first position information and the second position information, wherein the third position information indicates an absolute position of the second carrier; and

the transceiver unit is configured to send the third position information to the second carrier.

14. The apparatus according to claim 13, wherein the obtaining unit is further configured to:

obtain fourth position information sent by the second carrier, wherein the fourth position information indicates a position of a third carrier relative to the second carrier;

the determining unit is further configured to determine fifth position information based on the third position information and the fourth position information, wherein the fifth position information indicates an absolute position of the third carrier; and

the transceiver unit is further configured to send the fifth position information to the third carrier.

15. The apparatus according to claim 13 or 14, wherein before the determining unit determines the third position information based on the first position information and the second position information, the obtaining unit is further configured to:

obtain information that is about a position of the second carrier and that is sent by the second carrier; and
the determining unit is further configured to determine that the position of the second carrier is invalid.

16. The apparatus according to claim 15, wherein the determining unit is configured to:
determine the third position information based on the position of the second carrier, the first position information, and the second position information.

17. The apparatus according to any one of claims 13 to 16, wherein before the obtaining unit obtains the second position information sent by the first carrier, the determining unit is further configured to:

determine that a global positioning system GPS signal strength of an area in which the first carrier is located is less than or equal to a preset strength threshold; and
the transceiver unit is further configured to send a first instruction to the first carrier, wherein the first instruction instructs the first carrier to determine the position of the second carrier relative to the first carrier.

18. The apparatus according to any one of claims 13 to 17, wherein a positioning capability of the first carrier is stronger than a positioning capability of the second carrier.

19. A positioning apparatus, wherein the positioning apparatus is disposed on a first carrier, and the apparatus comprises a transceiver unit, configured to:

send first position information to a server, wherein the first position information is associated with an absolute position of the first carrier; and
send second position information to the server, wherein the second position information indicates a position of a second carrier relative to the first carrier; and
the first position information and the second position information are used to determine third position information, and the third position information indicates an absolute position of the second carrier.

20. The apparatus according to claim 19, wherein the apparatus further comprises a determining unit, configured to determine the position of the second carrier relative to the first carrier by using a wireless communication technology.

21. The apparatus according to claim 19 or 20, wherein the apparatus further comprises the determining unit, and before the transceiver unit sends the second position information to the server, the transceiver unit is further configured to:

receive a first instruction sent by the server, wherein the first instruction instructs the first carrier to determine the position of the second carrier relative to the first carrier; and
the determining unit is configured to determine the position of the second carrier relative to the first carrier in response to the first instruction.

22. A positioning apparatus, wherein the positioning apparatus is disposed on a second carrier, and the apparatus comprises a transceiver unit, configured to:

send information about a position of the second carrier to a server; and
receive third position information sent by the server, wherein the third position information indicates an absolute position of the second carrier.

23. The apparatus according to claim 22, wherein the transceiver unit is configured to:

send fourth position information to the server, wherein the fourth position information indicates a position of a third carrier relative to the second carrier; and

the fourth position information is used to determine fifth position information, and the fifth position information indicates an absolute position of the third carrier.

24. The apparatus according to claim 23, wherein the apparatus further comprises a determining unit, and the determining unit is configured to:

determine the position of the third carrier relative to the second carrier by using a wireless communication technology.

25. A positioning apparatus, comprising:

a memory, configured to store a computer program; and
a processor, configured to execute the computer program stored in the memory, so that the apparatus performs the method according to any one of claims 1 to 6, or the method according to any one of claims 7 to 9, or the method according to any one of claims 10 to 12.

26. A server, comprising the apparatus according to any one of claims 13 to 18.

27. A carrier, comprising the apparatus according to any one of claims 19 to 21, or the apparatus according to any one of claims 22 to 24.

28. A positioning system, comprising the server according to claim 26 and the carrier according to claim 27; or comprising the positioning apparatus according to claim 25.

29. A computer-readable storage medium, wherein the computer-readable storage medium stores an instruction, and when the instruction is executed by a processor, the processor is enabled to implement the method according to any one of claims 1 to 6, or the method according to any one of claims 7 to 9, or the method according to any one of claims 10 to 12.

30. A chip, wherein the chip comprises a circuit, and the circuit is configured to perform the method according to any one of claims 1 to 6, or the method according to any one of claims 7 to 9, or the method according to any one of claims 10 to 12.

Vehicle 100

Sensing system
120

Communication
system 130

Computing platform 150

Processor
151

Processor
152

...

Processor
15n

FIG. 1

FIG. 2

<u>**300**</u>

S301: Obtain first position information sent by a first carrier, where the first position information is associated with an absolute position of the first carrier

S302: Obtain second position information sent by the first carrier, where the second position information indicates a position of a second carrier relative to the first carrier

S303: Determine third position information based on the first position information and the second position information, where the third position information indicates an absolute position of the second carrier

S304: Send the third position information to the second carrier

FIG. 3

Vehicle 2

UWB tag

y

α2

UWB
base station

Computing
platform

(δx2, δy2)

LIN Bus

x

o

Vehicle 1

α1

(−δx1, −δy1)

UWB base
station

FIG. 4

**500**

FIG. 5

FIG. 6

Apparatus 2000

Obtaining unit 2010

Determining unit 2020

Transceiver unit 2020

FIG. 7

Apparatus 2000'

Transceiver unit 2010'

Determining unit 2020'

FIG. 8

Apparatus 2100

Processor 2110

Memory 2130

Transceiver 2120

FIG. 9

## INTERNATIONAL SEARCH REPORT

| International application No. |
| --- |
| **PCT/CN2023/139854** |

| | |
| --- | --- |
| **A.** | **CLASSIFICATION OF SUBJECT MATTER** |
| | G01C21/00(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC:G01C21/-

Documentation searched other than minimum documentation to the extent that such documents are included in the fields searched

Electronic data base consulted during the international search (name of data base and, where practicable, search terms used)

CNTXT, ENTXTC, DWPI, CNKI: 华为, 定位, 位置, 坐标, 绝对, 卫星定位, 北斗, 精确, 准确, 相对, 间, 第二, 另一, 其他; HUAWEI, posit+, locat+, coordinate, absolut+, relativ+, GPS, GNSS, BD, between, with, 2, 2nd, second, another, other, accurate, precise

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 101536596 A (ROHDE & SCHWARZ GMBH & CO. KG) 16 September 2009 (2009-09-16) <br> description, pages 1-7, and figures 1-5 | 1-30 |
| X | WO 2019021632 A1 (PANASONIC INTELLECTUAL PROPERTY CORPORATION OF AMERICA) 31 January 2019 (2019-01-31) <br> description, paragraphs 15-45, and figures 1-4 | 1-30 |
| A | CN 114440864 A (HUAWEI TECHNOLOGIES CO., LTD.) 06 May 2022 (2022-05-06) <br> entire document | 1-30 |
| A | CN 1926020 A (ALSTOM BELGIUM SA) 07 March 2007 (2007-03-07) <br> entire document | 1-30 |
| A | EP 1881340 A2 (C.& E. FEIN G.M.B.H.) 23 January 2008 (2008-01-23) <br> entire document | 1-30 |
| A | US 2013096869 A1 (FUJI XEROX CO., LTD.) 18 April 2013 (2013-04-18) <br> entire document | 1-30 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 February 2024** | **06 March 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

# EP 4 641 137 A1

**INTERNATIONAL SEARCH REPORT**
Information on patent family members

International application No.

**PCT/CN2023/139854**

| Patent document cited in search report | | | Publication date (day/month/year) | Patent family member(s) | | | Publication date (day/month/year) |
|---|---|---|---|---|---|---|---|
| CN | 101536596 | A | 16 September 2009 | DE | 102006056338 | A1 | 05 June 2008 |
| | | | | US | 2010056180 | A1 | 04 March 2010 |
| | | | | US | 8369872 | B2 | 05 February 2013 |
| | | | | EP | 2098088 | A1 | 09 September 2009 |
| | | | | EP | 2098088 | B1 | 26 September 2018 |
| | | | | JP | 2010511155 | A | 08 April 2010 |
| | | | | JP | 5450081 | B2 | 26 March 2014 |
| | | | | CA | 2667916 | A1 | 05 June 2008 |
| | | | | KR | 20090092780 | A | 01 September 2009 |
| | | | | WO | 2008064745 | A1 | 05 June 2008 |
| WO | 2019021632 | A1 | 31 January 2019 | US | 2020154244 | A1 | 14 May 2020 |
| | | | | US | 11070948 | B2 | 20 July 2021 |
| | | | | JP | 2019023591 | A | 14 February 2019 |
| | | | | JP | 6951144 | B2 | 20 October 2021 |
| CN | 114440864 | A | 06 May 2022 | | None | | |
| CN | 1926020 | A | 07 March 2007 | EP | 1720754 | A1 | 15 November 2006 |
| | | | | EP | 1720754 | B1 | 25 February 2009 |
| | | | | US | 2007203640 | A1 | 30 August 2007 |
| | | | | US | 7769538 | B2 | 03 August 2010 |
| | | | | WO | 2005095174 | A1 | 13 October 2005 |
| EP | 1881340 | A2 | 23 January 2008 | DE | 102006034270 | A1 | 24 January 2008 |
| | | | | US | 2008018912 | A1 | 24 January 2008 |
| US | 2013096869 | A1 | 18 April 2013 | JP | 2013084170 | A | 09 May 2013 |
| | | | | JP | 5974445 | B2 | 23 August 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211697815